(19) Europäisches Patentamt
European Patent Office
Office européen des brevets

(11) **EP 2 163 852 B1**

(12) **FASCICULE DE BREVET EUROPEEN**

(45) Date de publication et mention
de la délivrance du brevet:
**10.02.2016 Bulletin 2016/06**

(51) Int Cl.:
***G01D 5/12*** *(2006.01)*

(21) Numéro de dépôt: **09290613.0**

(22) Date de dépôt: **04.08.2009**

(54) **Système et procédé de mesure du mouvement axial d'une pièce mobile en rotation**

Messsystem und verfahren der axialen Bewegung eines beweglichen Teils, das sich dreht

System and method for measuring the axial movement of a rotating mobile element

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **28.08.2008 FR 0804747**

(43) Date de publication de la demande:
**17.03.2010 Bulletin 2010/11**

(73) Titulaire: **SNR Roulements
74000 Annecy (FR)**

(72) Inventeurs:
• **Desbiolles, Pascal
74570 Thorens Glières (FR)**

• **Vandamme, Etienne
74650 Chavanod (FR)**

(74) Mandataire: **Novagraaf Technologies
Bâtiment O2
2, rue Sarah Bernhardt
CS90017
92665 Asnières-sur-Seine Cedex (FR)**

(56) Documents cités:
**EP-A- 1 037 015    EP-A- 1 876 422
DE-A1- 19 609 793**

**Description**

**DOMAINE TECHNIQUE DE L'INVENTION**

L'invention concerne un système de mesure du mouvement d'une pièce mobile en rotation et un procédé de mise en oeuvre de ce système.

L'invention concerne plus particulièrement la mesure du déplacement axial d'une pièce mobile en rotation autour d'un axe et en translation selon un axe parallèle à l'axe de rotation.

**ÉTAT DE LA TECHNIQUE**

Pour fonctionner correctement, une liaison pivot nécessite un jeu axial de fonctionnement. Toutefois, le jeu varie généralement en fonction de l'état des pièces de guidage et des paliers. Il est donc capital de mesurer le jeu axial qui est un bon indicateur de l'état d'usure du palier. Dans les boîtes d'essieu ferroviaire par exemple, les roulements sont victimes de fretting corrosion qui au fur et à mesure de l'usure des bagues, induit un jeu axial qui peut dépasser le mm.

Dans l'art antérieur, il est connu des systèmes magnétiques de mesure du mouvement d'un organe tournant utilisant un codeur et un détecteur. Le codeur est généralement un anneau, solidaire de l'organe tournant, comportant une piste annulaire magnétique sur laquelle une pluralité de paires pôles Nord et Sud, equirépartis, sont magnétisées. Le capteur fixe est disposé radialement, en regard de la piste magnétique et composé d'éléments sensibles au champ magnétique. Le capteur délivre des signaux magnétiques dont la fréquence permet notamment de déterminer la vitesse de rotation de l'organe tournant. Toutefois, ces systèmes ne permettent pas de mesurer le déplacement axial de la pièce mobile en rotation.

Il est également connu de disposer le capteur face à l'anneau et de mesurer la variation d'intensité magnétique afin de déterminer le déplacement axial de l'organe tournant. Toutefois, ces mesures ne sont pas fiables car la mesure de l'intensité d'un champ magnétique présente une dérive en température importante. Par conséquent, ce système n'est pas applicable dans un environnement sévère présentant des fortes variations de température.

Pour déterminer le déplacement axial d'un arbre dans un alésage, il existe également des solutions « bout d'arbre », où un capteur de position ou de proximité est monté en face de l'extrémité l'arbre. Toutefois, outre le fait que ce ne soit pas possible, dans certains cas, pour des raisons d'encombrement, le bout d'arbre a parfois une fonction : retour de courant, pignon conique, qui exclue cette solution.

Par ailleurs, la demande de brevet EP 1 876 422 divulgue un système de détection d'un déplacement axial. Ce système utilise un anneau magnétique multipolaire solidaire de l'organe tournant et un capteur fixe disposé radialement, en regard et à distance de lecture, de la circonférence de l'anneau. Sur sa périphérie, l'anneau présente une transition magnétique singulière qui est inclinée par rapport à l'axe de rotation de la pièce tournante. Lorsque l'organe tournant s'est déplacé axialement, le système détecte une modification de la longueur des pôles, de part et d'autre de la singularité. Il est donc possible d'en déduire un déplacement axial de la pièce tournante. Toutefois, la mesure du déplacement axial n'est effectuée qu'une seule fois par tour, et la mesure de vitesse est faussée sur ce pôle. Cette solution est donc incompatible avec une mesure de vitesse haute résolution.

Dans le document DE 196 09 793 est décrit un dispositif de mesure pour déterminer la vitesse de rotation, la direction de rotation et le rapport de transmission d'une transmission à variation continue. Ce dispositif met en oeuvre un codeur denté à deux pistes, à savoir : une piste à dents à profil axial et une piste à dents à profil en hélice, ce codeur étant associé à une joue d'une poulie conique de la transmission. Un capteur est associé à chaque piste, pour délivrer deux signaux périodiques de fréquence proportionnelle à la fréquence de rotation du codeur. Le déphasage entre les deux signaux permet de déterminer le positionnement axial de la joue, le signe du déphasage indique la direction de rotation.

La demande de brevet japonais JP 2006201157 décrit un système permettant de mesurer le déplacement axial d'une pièce mobile en rotation. Le système de mesure comprend un codeur annulaire solidarisé à la bague intérieure d'un roulement à billes et un ou deux capteurs fixés à la bague extérieure du roulement et situés, radialement, en regard de la piste de codage annulaire du codeur.

Dans un mode de réalisation, illustré sur la figure 10 de la demande de brevet JP 2006201157, le codeur comprend deux pistes de codages. Les deux pistes présentent des motifs en forme d'hélice d'angle constant, de sens trigonométrique opposé. Un capteur est disposé en regard de chacune des deux pistes et une unité de calcul détermine le déplacement axial en fonction de la différence de phase entre les signaux provenant des capteurs.

Toutefois, ce document ne décrit pas le principe de détermination du déphasage entre les signaux provenant des capteurs. Or, la précision de la détermination de la valeur du déphasage est primordiale pour obtenir une valeur fiable du mouvement axial d'une pièce mobile en rotation.

En outre, il est d'autant plus difficile de déterminer précisément la valeur du déphasage que la vitesse de rotation de la pièce mobile présente des variations importantes.

## OBJET DE L'INVENTION

L'invention vise à remédier à ces problèmes en proposant un système et un procédé de mesure du mouvement axial d'une pièce mobile en rotation permettant de mesurer le déplacement axial de ladite pièce d'une manière fiable et précise.

À cet effet, et selon un premier aspect, l'invention propose un système de mesure du mouvement axial d'une pièce mobile en rotation selon un axe A, comportant :

- un dispositif de codage magnétique, comprenant au moins une piste annulaire sur laquelle sont magnétisées une pluralité de paires de pôles Nord et Sud, équirépartis, présentant une forme d'hélice d'axe A ;
- un dispositif de détection de champ magnétique comprenant au moins un premier et un deuxième capteurs magnétiques fixes, disposés à une distance axiale d non nulle l'un de l'autre, radialement en regard et à distance de lecture de la piste annulaire du dispositif de codage et sensibles aux variations du champ magnétique induit par le dispositif de codage.

Le système de mesure est remarquable en ce que le premier capteur comporte :

- une première pluralité d'éléments sensibles alignés, les éléments sensibles étant divisés en au moins deux premiers sous-ensembles ; et
- un circuit électronique agencé pour délivrer deux signaux analogiques SIN1 et COS1 de même amplitude en quadrature en fonction des signaux issus des premiers sous-ensembles et

et en ce que le système de mesure comprend en outre :

- un premier multiplicateur de résolution spatiale pour générer, à partir des deux signaux analogiques SIN1 et COS1 en quadrature, au moins un premier signal numérique changeant d'état N1 fois par période magnétique, N1 étant un nombre entier supérieur ou égal à 4;
- un calculateur pour déterminer le déphasage angulaire instantané entre le champ magnétique vu par le premier capteur et le champ magnétique vu par le deuxième capteur, en fonction du premier signal numérique.

Ainsi, le déphasage entre les signaux provenant du premier et du second capteur est mesuré de façon indépendante des variations de la vitesse de rotation de la pièce mobile car le nombre de changement d'état du signal numérique est représentatif de la position du capteur sur la paire de pôles considérée. Par conséquent, la mesure de déplacement axial obtenue par le système selon l'invention présente une marge d'erreur réduite.

En outre, le système de mesure utilisant deux capteurs, il est possible d'obtenir deux mesures de vitesses dupliquées. Ainsi, la redondance de la mesure permet de garantir une sécurité accrue dans la mesure de vitesse, ce qui est notamment particulièrement intéressant lorsque la mesure de vitesse est utilisée dans des procédés ABS ou anti-patinage.

Avantageusement, le premier multiplicateur de résolution spatiale est apte à générer, à partir des deux signaux analogiques SIN1 et COS1 en quadrature, deux signaux numériques en quadrature changeant d'état N1 fois par période magnétique. Ainsi, la présence des deux signaux numériques en quadrature permet d'obtenir le sens de rotation de l'arbre.

Avantageusement, le deuxième capteur comporte :

- une deuxième pluralité d'éléments sensibles alignés divisés en au moins deux deuxièmes sous-ensembles et
- un circuit électronique agencé pour délivrer deux signaux analogiques SIN2 et COS2 de même amplitude en quadrature en fonction des signaux issus des deuxièmes sous-ensembles.

Dans un mode de réalisation, le calculateur comporte au moins un premier compteur pour déterminer le déphasage en comptant le nombre de changements d'état du premier signal numérique entre un passage de seuil du signal SIN1 et un passage de seuil du signal SIN2.

Dans un autre mode de réalisation, le système de mesure comporte :

- un deuxième multiplicateur de résolution spatiale pour générer, à partir des deux signaux analogiques SIN2 et COS2 en quadrature au moins un deuxième signal numérique changeant d'état N2 fois par période magnétique, N2 étant un nombre entier supérieur ou égal à 4;et
- un compteur pour déterminer le déphasage angulaire instantané agencé pour être incrémenté par un des signaux numériques issu du premier ou du second multiplicateur et être décrémenté par l'autre signal numérique.

**EP 2 163 852 B1**

Ainsi, les signaux délivrés par le deuxième capteur sont des signaux haute résolution.

Dans un mode de réalisation, le deuxième capteur comporte un détecteur unique sensible au champ magnétique et délivrant un signal REF, le calculateur comportant au moins un compteur pour déterminer le déphasage en comptant le nombre de changements d'état du premier signal numérique entre un passage de seuil du signal SIN1 et un passage de seuil du signal REF.

Avantageusement, le système comporte en outre une mémoire pour mémoriser les valeurs extrêmes du déphasage et un analyseur pour en déduire le jeu axial entre le dispositif de codage et le dispositif de détection.

Avantageusement, le premier capteur et le deuxième capteur sont dans un circuit intégré personnalisé ASIC commun. Par conséquent, l'encombrement d'un tel dispositif de détection est limité et son intégration est donc facilitée. En outre, l'intégration des deux capteurs sur un même circuit intégré permet de diminuer sensiblement les coûts de fabrication du système de mesure.

Avantageusement, les pôles de ladite piste périphérique présentent une forme d'hélice d'axe A et d'angle d'hélice α variable suivant une fonction α = f(x) où x désigne la coordonnée axiale du point considéré sur l'axe B.

Le dispositif de codage selon l'invention ne nécessite dans ce cas qu'un seul anneau et les capteurs scrutant la piste périphérique peuvent ainsi être regroupés. En outre, l'angle d'hélice étant variable suivant une fonction déterminée, le dispositif de codage peut ne comprendre qu'une seule piste parcourue par les deux capteurs, afin de déterminer le déplacement axial de la pièce. L'anneau magnétique présente donc un encombrement réduit. L'intégration d'un dispositif de codage magnétique selon l'invention est ainsi facilitée.

Avantageusement l'angle d'hélice α est variable suivant une fonction α = f(x)= arctan (2K x) où K désigne une constante de proportionnalité non nulle.

Ainsi, le déplacement axial de la pièce mobile en rotation est une fonction linéaire du déphasage mesuré. Par conséquent, un tel dispositif de codage permet de déterminer simplement le déplacement axial.

Dans un autre mode de réalisation, les pôles de ladite piste périphérique présentent un angle d'hélice α constant, le dispositif de codage une deuxième piste annulaire d'axe A solidaire de la pièce mobile et sur laquelle sont magnétisées une pluralité de paires de pôles Nord et Sud, équirépartis, inclinés par rapport aux pôles de la première piste périphérique.

Selon un deuxième aspect, l'invention concerne un procédé de mesure du mouvement axial d'une pièce mobile en rotation autour d'un axe A par rapport à un référentiel fixe comportant au moins les étapes suivantes :

- engendrer un champ magnétique fixe par rapport à la pièce mobile à l'aide d'au moins une piste magnétique annulaire, l'une des composantes radiale du champ magnétique étant, à une distance radiale prédéterminée de l'axe A, dans un référentiel lié à la pièce mobile, une fonction F (Θ, x) de la position angulaire Θ considérée sur la piste et de la position axiale x considérée sur la piste, telle que :

$$F(\Theta,x) = K\sin\left\{P\left[\Theta + G(x)\right]\right\}$$

où P est un entier, K une constante réelle et G une fonction monotone donnée de X,
- délivrer deux signaux analogiques SIN1 et COS1 de même amplitude en quadrature en fonction des signaux représentatifs des variations du champ magnétique vu par un premier capteur fixe par rapport au référentiel et disposé en regard d'une piste annulaire,
- générer, à partir des deux signaux analogiques SIN1 et COS1 en quadrature, au moins un premier signal numérique changeant d'état N1 fois par période magnétique, N1 étant un nombre entier supérieur ou égal à 4 ;
- délivrer un signal référence REF fonction des variations du champ magnétique vu par un deuxième capteur fixe par rapport au référentiel fixe et distant du premier capteur d'une distance axial d,
- déterminer un déphasage angulaire instantané entre le champ magnétique vu par le premier capteur et le champ magnétique vu par le deuxième capteur, en fonction du premier signal numérique, du signal référence REF et du signal SIN1, et
- déterminer le déplacement axial de la piste magnétique par rapport au capteur en fonction du déphasage instantané.

Le procédé de mesure selon l'invention permet ainsi d'obtenir une mesure de déplacement axiale précise, qui n'est pas altérée par des variations de la vitesse de rotation de la pièce mobile.

Avantageusement, le procédé comporte les étapes suivantes :

- délivrer deux signaux analogiques SIN2 et COS2 de même amplitude en quadrature en fonction des signaux représentatifs des variation du champ magnétique vu par le deuxième capteur,
- déterminer le signal REF en fonction de SIN2 et/ou de COS2.

Dans un mode de réalisation, le procédé comporte les étapes suivantes :

- délivrer deux signaux analogiques SIN2 et COS2 de même amplitude en quadrature en fonction des signaux représentatifs des variations du champ magnétique vu par le deuxième capteur,
- générer, à partir des deux signaux analogiques SIN2 et COS2 en quadrature, au moins un deuxième signal numérique changeant d'état N1 fois par période magnétique, N1 étant un nombre entier supérieur ou égal à 4, le deuxième signal numérique constituant le signal de référence REF,
- déterminer le déphasage instantané en fonction de la différence entre le deuxième signal numérique et le premier signal numérique.

Avantageusement, le signal REF est proportionnel au signal SIN2 ou au signal COS2.

Avantageusement, la fonction G est une fonction linéaire de constante R non nulle, telle que :

$$G(x) = R\frac{(x - x_0)}{x_0}$$

## BRÈVE DESCRIPTION DES FIGURES

D'autres objets et avantages de l'invention apparaîtront au cours de la description qui suit, faite en référence aux dessins annexés, dans lesquels :

- la figure 1 est une représentation schématique d'un système de mesure du déplacement axial selon un premier mode de réalisation ;

- la figure 2 est une représentation schématique détaillée d'un des anneaux magnétiques composant le système de mesure de la figure 1 ;

- la figure 3 est une représentation schématique d'un système de mesure du déplacement axial selon un second mode de réalisation ;

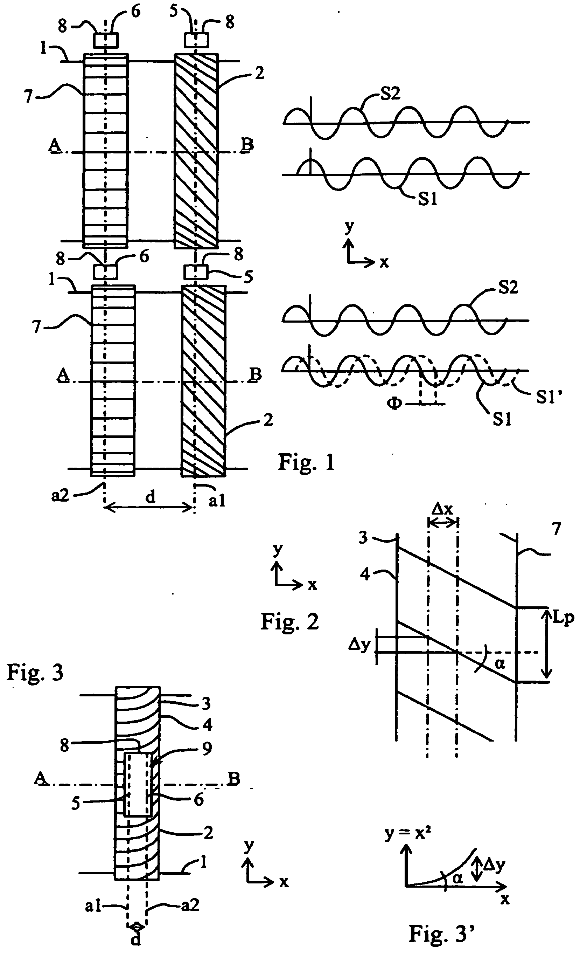

- la figure 3 est une courbe illustrant la forme d'une transition magnétique d'un pôle d'un anneau, lorsque les pôles présentent une forme d'hélice dont l'angle d'hélice $\alpha$ est variable suivant une fonction $\alpha$ =f(x)= arc tan 2K x ;

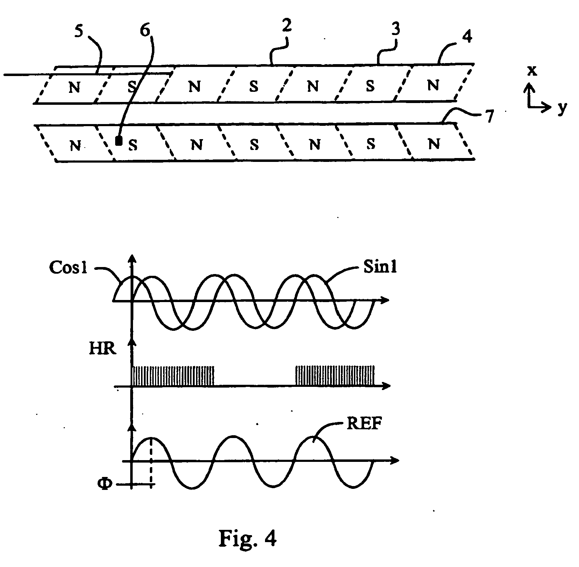

- la figure 4 est une représentation schématique d'un système de mesure selon le mode de réalisation de la figure 1, équipé d'un dispositif de détection selon une première variante de réalisation ;

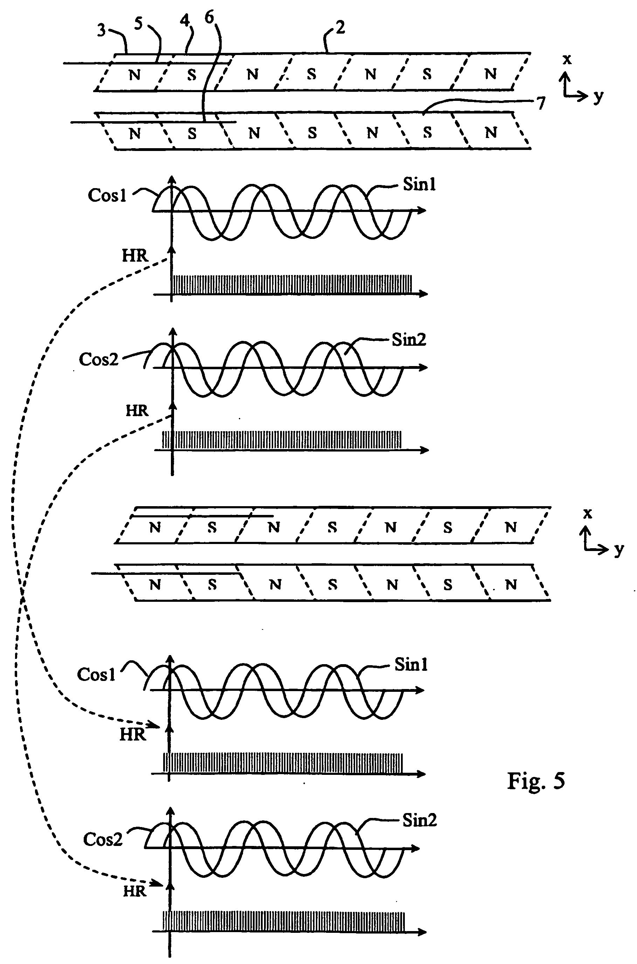

- la figure 5 est une représentation schématique d'un système de mesure selon le mode de réalisation de la figure 1, équipé d'un dispositif de détection selon une seconde variante de réalisation ; et

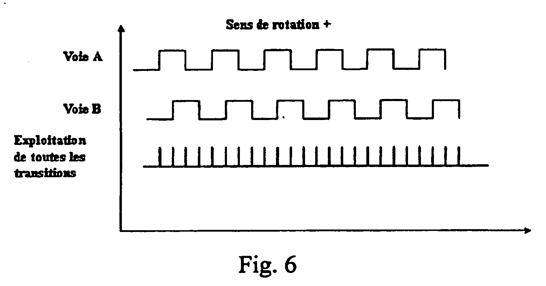

- la figure 6 illustre deux signaux numériques en quadrature (Voie A et voie B) générés par un multiplicateur de résolution spatiale, à partir des deux signaux analogiques SIN1 et COS1 en quadrature, et changeant d'état N1 fois par période magnétique, et un signal numérique obtenue en exploitant toutes les transitions desdits deux signaux numériques en quadrature.

## EXEMPLE DE RÉALISATION

Dans la description qui suit, le déplacement de l'arbre le long de son axe de rotation A est désigné par le terme de « déplacement axial ». x désigne la coordonnée axiale d'un point considéré sur l'axe B, axe de l'anneau « codeur », et y désigne la coordonnée curviligne d'un point de la piste périphérique de l'anneau, mesurée dans un plan normal à l'axe B.

En outre, on entend par « longueur polaire Lp », la longueur d'un pôle magnétique mesuré selon l'axe y.

Par ailleurs, on entend par angle d'hélice, au sens de la présente description, l'angle qui est formé par la tangente à l'hélice du pôle par rapport à l'axe x.

Par sonde à effet Hall, on désigne ici des capteurs comprenant au moins un élément sensible, généralement un semi-conducteur sous forme de plaquette, tel que, lorsqu'il est parcouru par un courant I, en étant par ailleurs soumis à une induction B faisant avec le courant un angle $\theta$, il apparaît dans une direction perpendiculaire au courant I et à l'induction B une tension V valant V= K.I.B. sin θ, K étant appelé « constante de Hall », et étant caractéristique du matériau et de la géométrie de l'élément sensible, K variant avec la température.

Par « magnéto-resistance », on désigne ici une varistance sensible à l'intensité d'un champ magnétique, en d'autres termes une résistance en matériau semi-conducteur dont la valeur ohmique varie lorsque varie l'intensité d'un champ magnétique unidirectionnel appliqué perpendiculairement à la direction du courant qui parcourt la résistance.

Le système et le procédé selon l'invention visent à mesurer le mouvement d'une pièce mobile en rotation autour d'un axe A et en translation parallèlement à l'axe A, telle que l'arbre 1 qui est représenté sur les figure 1 et 3.

Le système de mesure du déplacement comprend un générateur d'impulsions magnétiques appelé dispositif de codage, un dispositif de détection de champ magnétique et une unité de traitement du signal 8 permettant de traiter les signaux provenant du dispositif de détection afin d'obtenir l'information désirée, et notamment le déplacement axial de l'arbre 1.

Le système de mesure, représenté sur la figure 1, comprend un dispositif de codage composé de deux anneaux 2, 7 magnétiques multipolaires d'axe B, appelés également « codeurs ». Les anneaux 2, 7 sont solidarisés à l'arbre 1, concentriquement à son axe de rotation A.

Les anneaux magnétiques 2, 7 comprennent des pôles, Nord et Sud 3, 4, disposés sur la circonférence de l'anneau 2, 7, et formant une piste périphérique. Les pôles sont équirépartis sur la périphérie des anneaux 2, 7 et présentent des longueurs polaires Lp constantes.

Les anneaux 2, 7 peuvent, par exemple, être des pièces en matériau synthétique chargé de particules de ferrite de Baryum, ou de ferrite de Strontium, ou d'un autre matériau ferromagnétique dur, formée d'une pluralité de domaines contigus, à direction d'aimantation inversée, d'un domaine donné par rapport aux deux domaines contigus.

Les pôles de la piste périphérique du premier anneau 2 présentent une forme d'hélice d'axe B, dont l'angle d'hélice α est constant. Quant au second anneau 7, ou anneau « de référence », les pôles de sa piste périphériques s'étendent selon une direction parallèle à l'axe de rotation A.

Dans un référentiel lié à l'arbre, l'une des composantes du champ magnétique engendré par le premier anneau 2, présentant une forme d'hélice d'axe B d'angle d'hélice α constant, est, à une distance radiale prédéterminée de l'axe A, une fonction F (Θ, X) de la position angulaire Θ considérée sur la piste et de la position axiale X considérée sur la piste, telle que :

$$F(\Theta, X) = K.\Psi\left(P\left[\Theta + G(X)\right]\right)$$

où P est un entier, G une fonction strictement croissante donnée de X, et T une fonction périodique de période 2π : et

$$G(x) = R\frac{(x - x_0)}{x_0}$$

Le dispositif de détection de champ magnétique est composé de deux capteurs 5, 6, fixes par rapport à l'axe de l'arbre 1, dont les axes de lecture, désignés $a_1$ et $a_2$, sont distants d'une longueur d constante et orientés radialement à l'axe A de rotation de l'arbre 1. Chaque capteur 5, 6 est disposé en regard et à distance de lecture de la piste périphérique d'un des anneaux multipolaires 2, 7. Les capteurs 5, 6 sont, par exemple, choisis parmi les groupes comprenant les sondes à effet Hall, les magnétorésistances, les magnétorésistances tunnels ou les magnétorésistances géantes et sont placés à distance de lecture de la piste périphérique de telle sorte qu'ils soient aptes à délivrer des signaux représentatifs de l'induction magnétique délivrée par les anneaux 2, 7 à l'entrefer considéré.

Par conséquent, lorsque l'arbre 1 est en rotation, les capteurs 5, 6 délivrent des signaux sinusoïdaux, analogiques, proportionnelles à l'intensité magnétique délivrée par les anneaux multipolaires 2, 7 à l'entrefer considéré. Bien entendu, la période temporelle des signaux sinusoïdaux est proportionnelle à la longueur polaire Lp des pôles et à la vitesse de rotation de l'arbre 1.

Lorsque l'arbre 1 est déplacé axialement, les anneaux magnétiques 2, 7 se déplacent par rapport aux axes de lectures $a_1$ et $a_2$ (voir l'illustration du bas de la figure 1). Les signaux S1 issus du capteur 5 disposé en vis-à-vis du premier anneau 2 subissent alors un déphasage, en raison de la forme hélicoïdale des pôles du premier anneau 2 alors que la phase des signaux S2 issus du second capteur 6 n'est pas modifiée car les pôles du second anneau 3 sont orientés parallèlement à l'axe de rotation A de l'arbre 1.

Par conséquent, l'unité de traitement du signal 8 est en mesure de déterminer le déplacement axial de la pièce, en fonction du déphasage entre les signaux provenant des deux capteurs et de l'angle d'hélice α du premier anneau.

En effet, le déplacement axial est directement déductible du déphasage Δφ subi par le premier signal $S_1$, $S_1'$.

Le déplacement axial Δx (voir figure 2) est proportionnel à l'angle d'hélice α et à Δy qui représente la différence de coordonnées curvilignes de deux points d'une transition magnétique, situés respectivement dans le plan de lecture du premier capteur lorsque l'arbre 1 est dans sa position initiale et dans sa position décalée axialement. La relation est la suivante :

$$\Delta x = \Delta y \ / \ \tan \alpha$$

Or Δy est directement proportionnelle au déphasage Δϕ. Le déplacement axial Δx peut donc s'exprimer de la façon suivante :

$$\Delta x = (\Delta \phi \ ^* \ Lp \ ^*) \ / \ (180 \ ^* \ \tan \alpha)$$

Avec Lp : la longueur polaire, Δϕ exprimé en degrés et α exprimé en radians.

Dans un autre mode de réalisation, représenté sur la figure 3, le dispositif de codage comprend un seul anneau magnétique 2 multipolaire d'axe B, appelé également « codeur ». L'anneau 2 est solidarisé à l'arbre 1, concentriquement à l'axe de rotation A de l'arbre. Les pôles 3, 4 de la piste périphérique de l'anneau 2 présentent une forme d'hélice d'axe B dont l'angle d'hélice α est variable suivant une fonction α = f(x) où x désigne la coordonnée axiale du point considéré sur l'axe B.

En d'autres termes, dans un référentiel lié à l'arbre, l'une des composantes radiales du champ magnétique engendré par l'anneau 2 est, à une distance radiale prédéterminée de l'axe A, une fonction F (Θ, X) de la position angulaire Θ considérée sur la piste et de la position axiale X considérée sur la piste, telle que :

$$F(\Theta, X) = K.\Psi\big(P\big[\Theta + G(X)\big]\big)$$

où P est un entier, G une fonction strictement croissante donnée de X, et Ψ une fonction périodique de période $2\pi$.

Comme dans le mode de réalisation précédent, le dispositif de détection de champ magnétique comprend deux capteurs 5, 6 magnétiques fixes qui sont disposés radialement en regard de la piste périphérique de l'anneau 2. Les axes de lecture des capteurs 5, 6, désignés a1 et a2, sont distants d'une longueur d constante et orientés radialement à l'axe A de rotation de l'arbre 1.

Dans ce cas, le dispositif de détection pourra être utilisé de façon intégrée sur un substrat en silicium ou équivalent, par exemple AsGa, de sorte à former un circuit intégré personnalisé pour application spécifique, circuits parfois désignés sous le terme ASIC (Application Specific integrated Circuit), pour faire référence aux circuits intégrés conçus partiellement ou complètement en fonction des besoins. Ainsi, dans le mode de réalisation représenté sur la figure 3, le premier 5 et le second capteur 6 sont intégrés sur l'ASIC 9.

Lorsque l'arbre 1 est déplacé axialement, l'anneau magnétique 2 se déplace par rapport aux axes de lectures $a_1$ et $a_2$ et le déphasage ϕ entre les signaux issus du premier 5 et du second capteurs 6 est modifié. En effet, comme les pôles 3, 4 de l'anneau 2 présentent une forme hélicoïdale dont l'angle d'hélice α est variable, le déphasage entre les signaux issus du premier 5 et du second 6 capteurs est modifié en fonction de l'amplitude du déplacement axial.

Par conséquent, l'unité de traitement du signal 8 est en mesure de déterminer le déplacement axial de la pièce, en fonction du déphasage entre les signaux provenant des deux capteurs et de la fonction α = f(x).

L'avantage majeur de cette solution est de ne nécessiter qu'un seul anneau 6 multipolaire. En outre, les deux capteurs 5, 6 peuvent être regroupés sur un seul circuit intégré 7. Par conséquent, ce système est particulièrement avantageux pour des applications où les coûts et/ou l'encombrement doivent être limités.

Dans le mode de réalisation représenté, les pôles 3, 4 de l'anneau présentent une forme hélicoïdale suivant une fonction y = K $x^2$ (voir figure 3'). En d'autres termes, l'angle d'hélice est variable suivant une fonction α = f(x)= arc tan 2K x où K désigne une constante de proportionnalité non nulle.

Dans ce cas, la fonction G, paramètre de la fonction F (Θ, X) de génération de champs magnétique, mentionnée ci-dessus est telle que :

$$G(x) = R\left(\frac{x - x_0}{x_0}\right)^2$$

Le déphasage $\phi$ est une fonction linéaire de $\Delta y$ qui représente ici la différence de coordonnées curvilignes de deux points d'une transition magnétique, situés respectivement dans le plan de lecture du premier et du second capteur.

En outre, lorsque les pôles 3, 4 de l'anneau 2 présentent une forme hélicoïdale suivant une fonction $y = x^2$, alors $\Delta y$ est égale à $(X^2-(X+d)^2)= -2Xd-d^2 \sim 2Xd$, qui est une fonction linéaire du déplacement axial X (voir figure 3'). Par conséquent, la valeur du déphasage $\phi$ est une fonction linéaire du déplacement axial. Ainsi, la mesure du déphasage permet de connaître la position absolue de l'arbre 1.

Enfin, dans un autre mode de réalisation de l'invention représenté sur les figures 4 et 5, le dispositif de codage est composé de deux anneaux 2, 7 magnétiques multipolaires d'axe B dont les pôles 3, 4 présentent une forme d'hélice d'axe B, dont les angles d'hélices $\alpha$ et $\beta$ sont constants, mais de sens trigonométrique opposé. Ainsi, lorsque l'arbre 1 subit un déplacement axial (figures 4 et 5), le déphasage observé entre les signaux SIN1 et REF ou SIN2, issus des capteurs 5, 6 est plus important et la sensibilité de la mesure de déplacement axial est doublée.

Nous décrirons par la suite les capteurs, l'unité de traitement du signal et le procédé de mesure selon l'invention en relation avec les modes de réalisation des figures 4 et 5. Toutefois, les capteurs, l'unité de traitement ainsi que le procédé de mesure détaillés par la suite, pourront s'appliquer indifféremment aux systèmes de mesure illustrés sur les figures 1 à 3.

Dans le mode de réalisation de l'invention illustré sur la figure 4, le premier capteur 5 est un capteur comportant une pluralité d'éléments alignés, sensibles aux champs magnétique, divisés en au moins deux sous-ensembles et un circuit électronique agencé pour délivrer deux signaux analogiques SIN1 et COS1, de même amplitude, en quadrature sensiblement parfaite, en fonction des signaux issus de ces sous-ensembles.

De tels capteurs sont par exemple décrits dans la demande FR 2 790 827 issue de la demanderesse.

Par ailleurs, le système comporte un multiplicateur de résolution spatiale qui génère à partir des deux signaux analogiques SIN1 et COS1 en quadrature au moins un signal numérique binaire changeant d'état N1 fois par période magnétique, N1 étant un nombre entier supérieur ou égal à 4. Un tel circuit multiplicateur de résolution est par exemple décrit dans le document EP 0 929 795 au nom de la demanderesse. Le multiplicateur de résolution spatiale pourra indifféremment être intégré à l'unité 8 de traitement du signal 8 ou au capteur 5.

Dans un mode de réalisation préféré, le multiplicateur de résolution spatiale génère, à partir des deux signaux analogiques SIN1 et COS1, deux signaux numériques en quadrature, représentés en voies A et B sur la figure 6. Ainsi, le système de mesure est apte à déterminer le sens de rotation de l'arbre. En outre, en exploitant les fronts des deux signaux numériques en quadrature, mentionnés ci-dessus, il est possible d'obtenir le signal numérique haute résolution, représenté sur les figures 4, 5 et sur la partie basse de la figure 6, présentant une sensibilité deux fois plus importante que chacun desdits signaux numériques en quadrature.

Le second capteur 6 délivre un signal analogique pseudo sinusoïdal REF, illustré sur la figure 4.

Afin de déterminer le dé phasage, l'unité de traitement du signal 8 comporte un calculateur permettant de déterminer le déphasage angulaire instantané entre le champ magnétique vu par le premier capteur et le champ magnétique vu par le deuxième capteur, en fonction du premier signal numérique. A cet effet, le calculateur comporte un compteur apte à compter le nombre de changement d'état, c'est-à-dire le nombre de fronts haute résolution, entre un passage de seuil du signal SIN1 et un passage de seuil du signal REF. En pratique, le calculateur compte le nombre de fronts d'un signal numérique binaire entre un passage à zéro du signal SIN1 et le passage à zéro du signal de référence REF. Dans un mode de réalisation préféré, le déphasage est mesuré en comptant le nombre de fronts du signal numérique haute résolution correspondant aux fronts des deux signaux numériques en quadrature.

Par exemple, en supposant des signaux numériques en quadrature haute résolution donnant 128 fronts équi repartis sur une période magnétique, la distance entre deux fronts est de 360/128 = 2.81 degrés magnétiques. Ainsi, dans le cas où le signal SIN1 et le signal REF sont déphasés de 17 fronts haute résolution, le déphasage sera alors de 17*2.81 =47.8° magnétique.

Cette méthode présente l'avantage d'être très précise, en permettant une mesure du déphasage indépendante des variations de vitesse.

Dans le mode de réalisation représenté sur la figure 5, le second capteur est également un capteur comportant une pluralité d'éléments alignés, sensibles aux champs magnétiques, divisés en au moins deux sous-ensembles et un circuit électronique agencé pour délivrer deux signaux analogiques SIN2 et COS2, de même amplitude, en quadrature sensiblement parfaite, en fonction des signaux issus de ces sous-ensembles.

Dans un mode de réalisation, le compteur est apte à compter le nombre de changement d'état entre un passage de seuil du signal SIN1 et un passage de seuil du signal SIN2.

Dans un autre mode de réalisation, le système de mesure comporte un second multiplicateur de résolution générant à partir des deux signaux analogiques SIN2 et COS2 en quadrature au moins un signal numérique changeant d'état N2 fois par période magnétique, N2 étant un nombre entier supérieur ou égal à 4, égal à N1.

Avantageusement, le second multiplicateur de résolution spatiale génère, à partir des deux signaux analogiques SIN2 et COS2, deux signaux numériques en quadrature, afin d'obtenir, en exploitant les fronts des deux signaux numériques en quadrature, un signal numérique présentant une sensibilité plus importante.

Afin de mesurer le déphasage et en déduire l'amplitude du déplacement axial, l'unité de traitement du signal 8 comporte un compteur numérique qui est incrémenté par les fronts haute résolution issus du premier capteur et qui se décrémente par les fronts haute résolution issus du second capteur.

Lorsque l'arbre est dans une position initiale (voir haut de la figure 5) par rapport aux capteurs, le compteur reste proche d'une valeur nulle car il y a autant de fronts qui incrémentent que de fronts qui décrémentent. Toutefois, lorsque l'arbre se déplace (voir bas de la figure 5), la variation de la phase des signaux va conduire à une augmentation ou une diminution de la valeur affichée par le compteur.

Ainsi, cette méthode permet de connaître précisément l'amplitude du déplacement axial en mesurant l'amplitude de variation du compteur. En outre, cette méthode est également indépendante des variations de vitesse de rotation de la pièce mobile.

Dans un mode de réalisation préféré de l'invention, le système est équipé d'une mémoire pour mémoriser les valeurs extrêmes du déphasage et d'un analyseur pour en déduire le jeu axial entre le dispositif de codage et le dispositif de détection.

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

**1.** Système de mesure du mouvement axial d'une pièce mobile (1) en rotation selon un axe A, comportant :

- un dispositif de codage magnétique, comprenant au moins une piste annulaire sur laquelle sont magnétisées une pluralité de paires de pôles Nord et Sud (3, 4), équirépartis, présentant une forme d'hélice d'axe A ;
- un dispositif de détection de champ magnétique comprenant au moins un premier (5) et un deuxième capteurs (6) magnétiques fixes, disposés à une distance axiale d non nulle l'un de l'autre, radialement en regard et à distance de lecture de la piste annulaire du dispositif de codage et sensibles aux variations du champ magnétique induit par le dispositif de codage, le deuxième capteur délivrant un signal pseudo sinusoïdal REF;
**caractérisé en ce que** :

- le premier capteur (5) comporte :

- une première pluralité d'éléments sensibles alignés, les éléments sensibles étant divisés en au moins deux premiers sous-ensembles ; et
- un circuit électronique agencé pour délivrer deux signaux analogiques SIN1 et COS1 de même amplitude en quadrature en fonction des signaux issus des premiers sous-ensembles et

- le système de mesure comprend :

- un premier multiplicateur de résolution spatiale pour générer, à partir des deux signaux analogiques SIN1 et COS1 en quadrature, au moins un premier signal numérique changeant d'état N1 fois par période magnétique, N1 étant un nombre entier supérieur ou égal à 4;
- un calculateur pour déterminer le déphasage angulaire instantané entre le champ magnétique vu par le premier capteur et le champ magnétique vu par le deuxième capteur, en fonction du premier signal numérique, du signal SIN1 et du signal REF.

**2.** Système de mesure selon la revendication 1, **caractérisé en ce que** le premier multiplicateur de résolution spatiale est apte à générer, à partir des deux signaux analogiques SIN1 et COS1 en quadrature, deux signaux numériques en quadrature changeant d'état N1 fois par période magnétique.

**3.** Système de mesure selon la revendication 1 ou 2, **caractérisé en ce que** le deuxième capteur (4) comporte :

- une deuxième pluralité d'éléments sensibles alignés divisés en au moins deux deuxièmes sous-ensembles et
- un circuit électronique agencé pour délivrer deux signaux analogiques SIN2 et COS2 de même amplitude en quadrature en fonction des signaux issus des deuxièmes sous-ensembles.

4. Système de mesure selon la revendication 3, **caractérisé en ce que** le calculateur comporte au moins un premier compteur pour déterminer le déphasage en comptant le nombre de changements d'état du premier signal numérique entre un passage de seuil du signal SIN1 et un passage de seuil du signal SIN2.

5. Système de mesure selon la revendication 3, **caractérisé en ce qu'**il comporte :

- un deuxième multiplicateur de résolution spatiale pour générer, à partir des deux signaux analogiques SIN2 et COS2 en quadrature au moins un deuxième signal numérique changeant d'état N2 fois par période magnétique, N2 étant un nombre entier supérieur ou égal à 4 ; et
- un compteur pour déterminer le déphasage angulaire instantané agencé pour être incrémenté par un des signaux numériques issu du premier ou du second multiplicateur et être décrémenté par l'autre signal numérique.

6. Système selon la revendication 5, **caractérisé en ce que** le second multiplicateur de résolution spatiale est apte à générer, à partir des deux signaux analogiques SIN2 et COS2 en quadrature, deux signaux numériques en quadrature changeant d'état N2 fois par période magnétique.

7. Système selon la revendication 1 ou 2, **caractérisé en ce que** le deuxième capteur comporte un détecteur unique sensible au champ magnétique et délivrant un signal REF, le calculateur comportant au moins un compteur pour déterminer le déphasage en comptant le nombre de changements d'état du premier signal numérique entre un passage de seuil du signal SIN1 et un passage de seuil du signal REF.

8. Système selon l'une quelconque des revendications précédentes, **caractérisé en ce que** le système comporte en outre une mémoire pour mémoriser les valeurs extrêmes du déphasage et un analyseur pour en déduire le jeu axial entre le dispositif de codage et le dispositif de détection.

9. Système de mesure selon l'une quelconque des revendications précédentes, **caractérisé en ce que** le premier capteur et le deuxième capteur sont dans un circuit intégré personnalisé ASIC commun.

10. Système selon l'une quelconque des revendications précédentes, **caractérisé en ce que** les pôles de ladite piste périphérique présentent une forme d'hélice d'axe A et d'angle d'hélice $\alpha$ variable suivant une fonction $\alpha = f(x)$ où x désigne la coordonnée axiale du point considéré sur l'axe B.

11. Système selon la revendication 10, **caractérisé en ce que** l'angle d'hélice a est variable suivant une fonction $\alpha = f(x) = \text{arc tan } 2K\,x$ où K désigne une constante de proportionnalité non nulle.

12. Système de mesure selon l'une quelconque des revendications 1 à 11, **caractérisé en ce que** les pôles de ladite piste périphérique présentent un angle d'hélice $\alpha$ constant, le dispositif de codage comprenant une deuxième piste annulaire d'axe A solidaire de la pièce mobile et sur laquelle sont magnétisées une pluralité de paires de pôles Nord et Sud, équirépartis, inclinés par rapport aux poles de la première piste périphérique.

13. Procédé de mesure du mouvement axial d'une pièce mobile en rotation autour d'un axe A par rapport à un référentiel fixe, **caractérisé en ce qu'**il comporte au moins les étapes suivantes :

- engendrer un champ magnétique fixe par rapport à la pièce mobile à l'aide d'au moins une piste magnétique annulaire, l'une des composantes radiales du champ magnétique étant, à une distance radiale prédéterminée de l'axe A, dans un référentiel lié à la pièce mobile, une fonction F ($\Theta$, x) de la position angulaire $\Theta$ considérée sur la piste et de la position axiale x considérée sur la piste, telle que:

$$F(\Theta, X) = K.\Psi\big(P\big[\Theta + G(X)\big]\big)$$

où P est un entier, G une fonction strictement croissante donnée de X, $\Psi$ une fonction périodique de période $2\pi$, et K une constante de proportionnalité non nulle,

- délivrer deux signaux analogiques SIN1 et COS1 de même amplitude en quadrature en fonction des signaux représentatifs des variations du champ magnétique vu par un premier capteur fixe par rapport au référentiel et disposé en regard d'une piste annulaire,
- générer, à partir des deux signaux analogiques SIN1 et COS1 en quadrature, au moins un premier signal numérique changeant d'état N1 fois par période magnétique, N1 étant un nombre entier supérieur ou égal à 4 ;
- délivrer un signal référence REF fonction des variations du champ magnétique vu par un deuxième capteur fixe par rapport au référentiel fixe et distant du premier capteur d'une distance axiale d,
- déterminer un déphasage angulaire instantané entre le champ magnétique vu par le premier capteur et le champ magnétique vu par le deuxième capteur, en fonction du premier signal numérique, du signal référence REF et du signal SIN1, et
- déterminer le déplacement axial de la piste magnétique par rapport au capteur en fonction du déphasage instantané.

**14.** Procédé de mesure du mouvement selon la revendication 13, **caractérisé en ce que** deux signaux numériques en quadrature, changeant d'état N1 fois par période magnétique sont générés, à partir des deux signaux analogiques SIN1 et COS1 en quadrature.

**15.** Procédé de mesure du mouvement selon la revendication 13 ou 14, **caractérisé en ce qu'**il comporte les étapes suivantes :

- délivrer deux signaux analogiques SIN2 et COS2 de même amplitude en quadrature en fonction des signaux représentatifs des variations du champ magnétique vu par le deuxième capteur,
- déterminer le signal REF en fonction de SIN2 et/ou de COS2.

**16.** Procédé de mesure du mouvement selon la revendication 15, **caractérisé en ce que** le signal REF est proportionnel au signal SIN2 ou au signal COS2.

**17.** Procédé de mesure du mouvement selon la revendication 13 ou 14, **caractérisé en ce qu'**il comporte les étapes suivantes :

- délivrer deux signaux analogiques SIN2 et COS2 de même amplitude en quadrature en fonction des signaux représentatifs des variation du champ magnétique vu par le deuxième capteur,
- générer, à partir des deux signaux analogiques SIN2 et COS2 en quadrature, au moins un deuxième signal numérique changeant d'état N2 fois par période magnétique, N2 étant un nombre entier supérieur ou égal à 4, le deuxième signal numérique constituant le signal de référence REF,
- déterminer le déphasage instantané en fonction de la différence entre le deuxième signal numérique et le premier signal numérique.

**18.** Procédé de mesure de mouvement selon la revendication 17, **caractérisé en ce que** deux signaux numériques en quadrature, changeant d'état N2 fois par période magnétique sont générés, à partir des deux signaux analogiques SIN2 et COS2 en quadrature.

**19.** Procédé selon l'une quelconque des revendications 13 à 18, **caractérisé en ce que** la fonction G est une fonction linéaire de constante R non nulle, telle que :

.

$$G(x) = R\frac{(x - x_0)}{x_0}$$

**Patentansprüche**

**1.** System zum Messen der Axialbewegung eines drehbeweglichen Teils (1) entlang einer Achse A, umfassend:

- eine magnetische Codiervorrichtung, umfassend mindestens eine ringförmige Spur, auf der eine Vielzahl von Paaren von Nord- und Südpolen (3, 4), die gleich verteilt sind, magnetisiert sind, die eine Spiralform mit einer Achse A aufweist;
- eine Vorrichtung zur Erfassung eines Magnetfeldes, umfassend mindestens einen ersten (5) und einen zweiten festen Magnetsensor (6), die in einem Axialabstand d ungleich Null zueinander, radial gegenüberliegend und in einem Leseabstand zur ringförmigen Spur der Codiervorrichtung angeordnet und für die Variationen des Magnetfeldes, die durch die Codiervorrichtung induziert werden, sensibel sind, wobei der zweite Sensor ein Pseudosinussignal REF liefert;

**dadurch gekennzeichnet, dass**:

- der erste Sensor (5) umfasst:

    - eine erste Vielzahl von ausgerichteten sensiblen Elementen, die in mindestens zwei erste Untereinheiten unterteilt sind; und
    - eine elektronische Schaltung, die derart angeordnet ist, dass sie zwei analoge Signale SIN1 und COS1 derselben Quadraturamplitude in Abhängigkeit von den Signalen, die von den ersten Untereinheiten ausgehen, liefern, und

- das Messsystem umfasst:

    - einen ersten Raumauflösungsmultiplikator, um aus den beiden analogen Quadratursignalen SIN1 und COS1 mindestens ein erstes digitales Signal zu erzeugen, das seinen Zustand N1-mal pro Magnetperiode ändert, wobei N1 eine ganze Zahl größer oder gleich 4 ist;
    - einen Rechner, um die momentane Winkelphasenverschiebung zwischen dem vom ersten Sensor gesehenen Magnetfeld und dem vom zweiten Sensor gesehenen Magnetfeld in Abhängigkeit von dem ersten digitalen Signal, dem Signal SIN1 und dem Signal REF zu bestimmen.

2. Messsystem nach Anspruch 1, **dadurch gekennzeichnet, dass** der erste Raumauflösungsmultiplikator geeignet ist, aus zwei analogen Quadratursignalen SIN1 und COS1 zwei digitale Quadratursignale zu erzeugen, die ihren Zustand N1-mal pro Magnetperiode ändern.

3. Messsystem nach Anspruch 1 oder 2, **dadurch gekennzeichnet, dass** der zweite Sensor (4) umfasst:

    - eine zweite Vielzahl von ausgerichteten sensiblen Elementen, die in mindestens zwei Untereinheiten unterteilt sind, und
    - eine elektronische Schaltung, die derart vorgesehen ist, dass sie zwei analoge Signale SIN2 und COS2 derselben Quadraturamplitude in Abhängigkeit von den Signalen, die von den zweiten Untereinheiten kommen, liefern.

4. Messsystem nach Anspruch 3, **dadurch gekennzeichnet, dass** der Rechner mindestens einen ersten Zähler umfasst, um die Phasenverschiebung zu bestimmen, wobei die Anzahl von Zustandsänderungen des ersten digitalen Signals zwischen einem Schwellenübertritt des Signals SIN1 und einem Schwellenübertritt des Signals SIN2 gezählt wird.

5. Messsystem nach Anspruch 3, **dadurch gekennzeichnet, dass** es umfasst:

    - einen zweiten Raumauflösungsmultiplikator, um aus den beiden analogen Quadratursignalen SIN2 und COS2 mindestens ein zweites digitales Signal zu erzeugen, das seinen Zustand N2-mal pro Magnetperiode ändert, wobei N2 eine ganze Zahl größer oder gleich 4 ist; und
    - einen Zähler, um die momentane Winkelphasenverschiebung zu bestimmen, der derart angeordnet ist, dass er durch eines der digitalen Signale, die von dem ersten oder dem zweiten Multiplikator kommen, inkrementiert wird, und durch das andere digitale Signal dekrementiert wird.

6. System nach Anspruch 5, **dadurch gekennzeichnet, dass** der zweite Raumauflösungsmultiplikator geeignet ist, aus den zwei analogen Quadratursignalen SIN2 und COS2 zwei digitale Quadratursignale zu erzeugen, die ihren Zustand N2-mal pro Magnetperiode ändern.

7. System nach Anspruch 1 oder 2, **dadurch gekennzeichnet, dass** der zweite Sensor einen einzigen Detektor umfasst, der für das Magnetfeld sensibel ist und ein Signal REF liefert, wobei der Rechner mindestens einen Zähler umfasst, um die Phasenverschiebung zu bestimmen, wobei die Anzahl von Zustandsänderungen des ersten digitalen Signals zwischen einem Schwellübertritt des Signals SIN1 und einem Schwellübertritt des Signals REF gezählt wird.

8. System nach einem der vorhergehenden Ansprüche, **dadurch gekennzeichnet, dass** das System ferner einen Speicher, um die Extremwerte der Phasenverschiebung zu speichern, und einen Analysator umfasst, um davon das Axialspiel zwischen der Codiervorrichtung und der Erfassungsvorrichtung abzuleiten.

9. Messsystem nach einem der vorhergehenden Ansprüche, **dadurch gekennzeichnet, dass** der erste Sensor und der zweite Sensor in einer gemeinsamen personalisierten integrierten Schaltung ASIC sind.

10. System nach einem der vorhergehenden Ansprüche, **dadurch gekennzeichnet, dass** die Pole der Umfangsspur eine Spiralform mit einer Achse A und einem variablen Spiralwinkel $\alpha$ gemäß einer Funktion $\alpha = f(x)$ aufweisen, wobei x die Axialkoordinate des betreffenden Punktes auf der Achse B bezeichnet.

11. System nach Anspruch 10, **dadurch gekennzeichnet, dass** der Spiralwinkel $\alpha$ gemäß einer Funktion $\alpha = f(x) = \mathrm{arc\ tan}\ 2K\ x$ variabel ist, wobei K eine Proportionalitätskonstante ungleich Null bezeichnet.

12. Messsystem nach einem der Ansprüche 1 bis 11, **dadurch gekennzeichnet, dass** die Pole der Umfangsspur einen konstanten Spiralwinkel $\alpha$ aufweisen, wobei die Codiervorrichtung eine zweite ringförmige Spur mit einer Achse A umfasst, die mit dem beweglichen Teil verbunden ist und auf der eine Vielzahl von Paaren von Nord-Süd-Polen, die gleich verteilt und in Bezug auf die Pole der ersten Umfangsspur geneigt sind, magnetisiert sind.

13. Verfahren zum Messen der Axialbewegung eines drehbeweglichen Teils um eine Achse A in Bezug auf ein festes Bezugssystem, **dadurch gekennzeichnet, dass** es mindestens die folgenden Schritte umfasst:

- Erzeugen eines festen Magnetfeldes in Bezug auf den beweglichen Teil mit Hilfe mindestens einer ringförmigen Magnetspur, wobei eine der radialen Komponenten des Magnetfeldes in einem vorbestimmten Radialabstand zur Achse A in einem Bezugssystem, das mit dem beweglichen Teil verbunden ist, eine Funktion F($\theta$,X) der betreffenden Winkelposition $\theta$ auf der Spur und der betreffenden Axialposition X auf der Spur ist, wie:

$$F(\theta, X) = K \cdot \psi(P[\theta + G(X)])$$

wobei P eine ganze Zahl ist, G eine streng steigende gegebene Funktion von X ist, $\psi$ weine periodische Funktion der Periode $2\Pi$ ist und K eine Proportionalitätskonstante ungleich Null ist,
- Liefern von zwei analogen Signalen SIN1 und COS1 derselben Quadraturamplitude in Abhängigkeit von den Signalen, die für die Variationen des Magnetfeldes repräsentativ sind, gesehen von einem ersten in Bezug auf das Bezugssystem festen Sensor, der gegenüber einer ringförmigen Spur angeordnet ist,
- Erzeugen aus den beiden analogen Quadratursignalen SIN1 und COS1 mindestens eines ersten digitalen Signals, das seinen Zustand N1-mal pro Magnetperiode ändert, wobei N1 eine ganze Zahl größer oder gleich 4 ist;
- Liefern eines Referenzsignals REF, das von den Variationen des Magnetfeldes abhängt, gesehen von einem zweiten in Bezug auf das feste Bezugssystem festen Sensor, der vom ersten Sensor um einen Axialabstand d entfernt ist,
- Bestimmen einer momentanen Winkelphasenverschiebung zwischen dem vom ersten Sensor gesehenen Magnetfeld und dem vom zweiten Sensor gesehenen Magnetfeld, in Abhängigkeit von dem ersten digitalen Signal, dem Referenzsignal REF und dem Signal SIN1, und
- Bestimmen der Axialverschiebung der Magnetspur in Bezug auf den Sensor in Abhängigkeit von der momentanen Phasenverschiebung.

14. Verfahren zum Messen der Bewegung nach Anspruch 13, **dadurch gekennzeichnet, dass** zwei digitale Quadratursignale, die ihren Zustand N1-mal pro Magnetperiode ändern, aus den beiden analogen Quadratursignalen SIN1 und COS1 erzeugt werden.

15. Verfahren zum Messen der Bewegung nach Anspruch 13 oder 14, **dadurch gekennzeichnet, dass** es die folgenden Schritte umfasst:

- Liefern von zwei analogen Signalen SIN2 und COS2 derselben Quadraturamplitude in Abhängigkeit von den Signalen, die für die Variationen des Magnetfeldes, das vom zweiten Sensor gesehen wird, repräsentativ sind,
- Bestimmen des Signals REF in Abhängigkeit von SIN2 und/oder COS2.

**16.** Verfahren zum Messen der Bewegung nach Anspruch 15, **dadurch gekennzeichnet, dass** das Signal REF proportional zum Signal SIN2 oder zum Signal COS2 ist.

**17.** Verfahren zum Messen der Bewegung nach Anspruch 13 oder 14, **dadurch gekennzeichnet, dass** es die folgenden Schritte umfasst:

- Liefern von zwei analogen Signalen SIN2 und COS2 derselben Quadraturamplitude in Abhängigkeit von den Signalen, die für die Variationen des Magnetfeldes, gesehen vom zweiten Sensor, repräsentativ sind,
- Erzeugen aus den beiden analogen Quadratursignalen SIN2 und COS2 mindestens eines zweiten digitalen Signals, das seinen Zustand N2-mal pro Magnetperiode ändert, wobei N2 eine ganze Zahl größer oder gleich 4 ist, wobei das zweite digitale Signal das Referenzsignal REF darstellt,
- Bestimmen der momentanen Phasenverschiebung in Abhängigkeit von der Differenz zwischen dem zweiten digitalen Signal und dem ersten digitalen Signal.

**18.** Verfahren zum Messen der Bewegung nach Anspruch 17, **dadurch gekennzeichnet, dass** zwei digitale Quadratursignale, die ihren Zustand N2-mal pro Magnetperiode ändern, aus den beiden analogen Quadratursignalen SIN2 und COS2 erzeugt werden.

**19.** Verfahren nach einem der Ansprüche 13 bis 18, **dadurch gekennzeichnet, dass** die Funktion G eine lineare Funktion der Konstante R ungleich Null ist, wie:

$$G(x) = R\,\frac{(x - x_0)}{x_0}$$

**Claims**

**1.** System for measuring the axial movement of a mobile part (1) rotating on an axis A, comprising:

- a magnetic coding device, comprising at least one annular track on which are magnetized a plurality of north and south pole pairs (3, 4), equidistant, exhibiting a helical form of axis A;
- a magnetic field detection device comprising at least one first (5) and one second (6) fixed magnetic sensor, arranged at a non-zero axial distance d from one another, radially opposite and at a reading distance from the annular track of the coding device and sensitive to the variations of the magnetic field induced by the coding device, the second sensor delivering a pseudo-sinusoidal signal REF;

**characterized in that**

- the first sensor (5) comprises:

  - a first plurality of aligned sensitive elements, the sensitive elements being divided into at least two first subsets; and
  - an electronic circuit arranged to deliver two analogue signals SIN1 and COS1 of the same amplitude in quadrature as a function of the signals from the first subsets and

- the measurement system comprises:

  - a first spatial resolution multiplier for generating, from the two analogue signals SIN1 and COS1 in quadrature, at least one first digital signal changing state N1 times per magnetic period, N1 being an integer number greater than or equal to 4;
  - a computer for determining the instantaneous angular phase-shift between the magnetic field seen by the first sensor and the magnetic field seen by the second sensor, as a function of the first digital signal, of the signal SIN1 and of the signal REF.

**2.** Measurement system according to Claim 1, **characterized in that** the first spatial resolution multiplier is suitable for generating, from the two analogue signals SIN1 and COS1 in quadrature, two digital signals in quadrature changing state N1 times per magnetic period.

3. Measurement system according to Claim 1 or 2, **characterized in that** the second sensor (4) comprises:

- a second plurality of aligned sensitive elements divided into at least two second subsets and
- an electronic circuit arranged to deliver two analogue signals SIN2 and COS2 of the same amplitude in quadrature as a function of the signals from the second subsets.

4. Measurement system according to Claim 3, **characterized in that** the computer comprises at least one first counter for determining the phase-shift by counting the number of changes of state of the first digital signal between a threshold crossing of the signal SIN1 and a threshold crossing of the signal SIN2.

5. Measurement system according to Claim 3, **characterized in that** it comprises:

- a second spatial resolution multiplier for generating, from the two analogue signals SIN2 and COS2 in quadrature, at least one second digital signal changing state N2 times per magnetic period, N2 being an integer number greater than or equal to 4; and
- a counter for determining the instantaneous angular phase-shift arranged to be incremented by one of the digital signals from the first or from the second multiplier and being decremented by the other digital signal.

6. System according to Claim 5, **characterized in that** the second spatial resolution multiplier is suitable for generating, from the two analogue signals SIN2 and COS2 in quadrature, two digital signals in quadrature changing state N2 times per magnetic period.

7. System according to Claim 1 or 2, **characterized in that** the second sensor comprises a single detector sensitive to the magnetic field and delivering a signal REF, the computer comprising at least one counter for determining the phase-shift by counting the number of changes of state of the first digital signal between a threshold crossing of the signal SIN1 and a threshold crossing of the signal REF.

8. System according to any one of the preceding claims, **characterized in that** the system further comprises a memory for storing the extreme values of the phase-shift and an analyser for deducing therefrom the axial play between the coding device and the detection device.

9. Measurement system according to any one of the preceding claims, **characterized in that** the first sensor and the second sensor are in a common customized integrated circuit ASIC.

10. System according to any one of the preceding claims, **characterized in that** the poles of said peripheral track exhibit a helical form of axis A and of helix angle $\alpha$ that is variable according to a function $\alpha = f(x)$ where x designates the axial coordinate of the point considered on the axis B.

11. System according to Claim 10, **characterized in that** the helix angle $\alpha$ is variable according to a function $\alpha = f(x) = \arctan 2K\, x$ where K designates a non-zero proportionality constant.

12. Measurement system according to any one of Claims 1 to 11, **characterized in that** the poles of said peripheral track exhibit a constant helix angle $\alpha$, the coding device comprising a second annular track of axis A secured to the mobile part and on which are magnetized a plurality of north and south pole pairs, equidistant, inclined relative to the poles of the first peripheral track.

13. Method for measuring the axial movement of a mobile part rotating about an axis A relative to a fixed reference frame, **characterized in that** it comprises at least the following steps:

- generating a magnetic field that is fixed relative to the mobile part using at least one annular magnetic track, one of the radial components of the magnetic field being, at a predetermined radial distance from the axis A, in a reference frame linked to the mobile part, a function $F(\Theta, x)$ of the angular position $\Theta$ considered on the track and of the axial position x considered on the track, such that:

$$F(\Theta, X) = K \cdot \Psi\left(P\left[\Theta + G(X)\right]\right)$$

where P is an integer, G is a strictly increasing given function of X, $\Psi$ is a periodic function of period $2\pi$, and K is a non-zero proportionality constant,

- delivering two analogue signals SIN1 and COS1 of the same amplitude in quadrature as a function of the signals representative of the variations of the magnetic field seen by a first sensor that is fixed relative to the reference frame and arranged facing an annular track,

- generating, from the two analogue signals SIN1 and COS1 in quadrature, at least one first digital signal changing state N1 times per magnetic period, N1 being an integer number greater than or equal to 4;

- delivering a reference signal REF that is a function of the variations of the magnetic field seen by a second sensor that is fixed relative to the fixed reference frame and remote from the first sensor by an axial distance d,

- determining an instantaneous angular phase-shift between the magnetic field seen by the first sensor and the magnetic field seen by the second sensor, as a function of the first digital signal, of the reference signal REF and of the signal SIN1, and

- determining the axial displacement of the magnetic track relative to the sensor as a function of the instantaneous phase-shift.

14. Method for measuring movement according to Claim 13, **characterized in that** two digital signals in quadrature, changing state N1 times per magnetic period, are generated, from the two analogue signals SIN1 and COS1 in quadrature.

15. Method for measuring movement according to Claim 13 or 14, **characterized in that** it comprises the following steps:

- delivering two analogue signals SIN2 and COS2 of the same amplitude in quadrature as a function of the signals representative of the variations of the magnetic field seen by the second sensor,
- determining the signal REF as a function of SIN2 and/or of COS2.

16. Method for measuring movement according to Claim 15, **characterized in that** the signal REF is proportional to the signal SIN2 or to the signal COS2.

17. Method for measuring movement according to Claim 13 or 14, **characterized in that** it comprises the following steps:

- delivering two analogue signals SIN2 and COS2 of the same amplitude in quadrature as a function of the signals representative of the variations of the magnetic field seen by the second sensor,
- generating, from the two analogue signals SIN2 and COS2 in quadrature, at least one second digital signal changing state N2 times per magnetic period, N2 being an integer number greater than or equal to 4, the second digital signal constituting the reference signal REF,
- determining the instantaneous phase-shift as a function of the difference between the second digital signal and the first digital signal.

18. Method for measuring movement according to Claim 17, **characterized in that** two digital signals in quadrature, changing state N2 times per magnetic period, are generated, from the two analogue signals SIN2 and COS2 in quadrature.

19. Method according to any one of Claims 13 to 18, **characterized in that** the function G is a linear function of non-zero constant R, such that:

$$G(x) = R\frac{(x - x_0)}{x_0}$$

Fig. 1

Fig. 2

Fig. 3

Fig. 3'

Fig. 4

Fig. 5

Fig. 6

**EP 2 163 852 B1**

## RÉFÉRENCES CITÉES DANS LA DESCRIPTION

**Documents brevets cités dans la description**

- EP 1876422 A
- DE 19609793
- JP 2006201157 B
- FR 2790827
- EP 0929795 A